# EUROPEAN PATENT APPLICATION

(11) **EP 2 615 571 A1**
(43) Date of publication of application: **17.07.2013**
(21) Application number: 12305058.5
(22) Date of filing: 16.01.2012
(51) Int. Cl.: G06F 21/70, H04L 9/32

(54) **Method of generating an identifier of an electronic device**

(71) Applicant: Gemalto SA, 92190 Meudon (FR)
(72) Inventor: Barral, Claude, 13705 La Ciotat Cedex (FR)

(57) **Abstract**

The invention is a method for generating an identifier of an electronic device which comprises first and second hardware components. The method comprises the steps of:
- identifying a first physical unclonable function able to generate a first response representative of said first hardware component,
- identifying a second physical unclonable function able to generate a second response representative of said second hardware component, and
- computing the identifier from said first and second responses.

## Description

### (Technical field)

The present invention relates to the methods of generating an identifier of an electronic device. It relates particularly to methods of generating an identifier of a device comprising a plurality of hardware components.

### (Background)

A Physical Unclonable Function (PUF) is a function that is embodied in a physical structure and is easy to evaluate but extremely difficult to predict. An individual PUF component must be easy to make but practically impossible to duplicate, even given the exact manufacturing process that produced it. When a physical stimulus is applied to the structure, it reacts in an unpredictable way due to the complex interaction of the stimulus with the physical microstructure of the component. This exact microstructure depends on physical factors introduced during manufacture which are unpredictable. The applied stimulus is called the challenge, and the reaction of the PUF is called the response. A specific challenge and its corresponding response together form a challenge-response pair which is specific to a given component. Such a challenge-response pair is assumed to be steady. The identity of the component is established by the properties of the microstructure itself.

It is known to authenticate one component of a device by using the result of a PUF execution. For instance, the plastic body of a smart card may be authenticated via a PUF as explained in EP0583709-A1 publication. Such an authentication is limited to the identifying of a single component belonging to a device.

There is a need for increasing the authentication of an electronic device.

### (Summary of the Invention)

An object of the invention is to solve the above mentioned technical problem.

The object of the present invention is a method for generating an identifier of an electronic device. The electronic device comprises first and second hardware components. The method comprises the following step:
- identifying a first physical unclonable function able to generate a first response representative of said first hardware component,
- identifying a second physical unclonable function able to generate a second response representative of said second hardware component, and
- computing the identifier of the electronic device by using said first and second responses.

Advantageously, the second physical unclonable function requires a challenge as input parameter and this challenge may be generated from said first response. The identifier may be generated from said second response.

Advantageously, the identifier may be generated by a third function which takes said first and second responses as input parameters.

Said third function may be a hash of the concatenation of said first and second responses.

Advantageously, the method may comprise the step of authenticating the electronic device by using said identifier.

Advantageously, the method may comprise the step of using said identifier as cryptographic key.

The step of computing the identifier may be performed into the electronic device or into a machine distinct from the electronic device.

Another object of the invention is an electronic device comprising first and second hardware components. The electronic device comprises a first means which is adapted to run a first physical unclonable function able to generate a first response representative of said first hardware component. The electronic device comprises a second means adapted to run a second physical unclonable function able to generate a second response representative of said second hardware component. The electronic device comprises a computing means adapted to compute an identifier of the electronic device by using said first and second responses.

Advantageously, said second physical unclonable function may require a challenge as input parameter and the electronic device may comprise a chaining means adapted to generate the challenge from said first response. The chaining means may be adapted to provide said second means with the challenge. The electronic device may comprise a generating means adapted to generate the identifier from said second response.

Advantageously, the computing means may be adapted to run a hash function which takes said first and second responses as input parameters and generates the identifier.

Another object of the invention is a system comprising a machine and an electronic device. The electronic device comprises first and second hardware components. The system comprises a first means adapted to run a first physical unclonable function able to generate a first response representative of said first hardware component. The system comprises a second means adapted to run a second physical unclonable function able to generate a second response representative of said second hardware component. The system comprises a computing means adapted to compute an identifier of the electronic device by using said first and second responses.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of a system comprising an electronic device according to a first embodiment of the invention;
- Figure 2 is an example of a step sequence for generating an identifier of the device according to a one embodiment of the invention;
- Figure 3 is another example of a step sequence for generating an identifier of the device according to another embodiment of the invention; and
- Figure 4 depicts schematically an example of a system comprising an electronic device according to a second embodiment of the invention.

### (Detailed description of the preferred embodiments)

The invention may apply to any types of electronic devices comprising several hardware components which may be identified thanks to a PUF. In the following examples, the electronic device is a smart card but it could be any other kind of device. In particular, the electronic device may be a personal computer, a tablet, a mobile phone, a mass storage USB token or a secure element connected to a host machine.

The present invention relies on the combination of a plurality of PUF in order to identify a device thanks to a set of hardware components belonging to the device. The invention relies on the fact that a physical unclonable function generates a result which is representative of a corresponding hardware component.

The invention allows guaranteeing that several hardware components which are assumed to belong to a single device have neither been dismantled nor replaced.

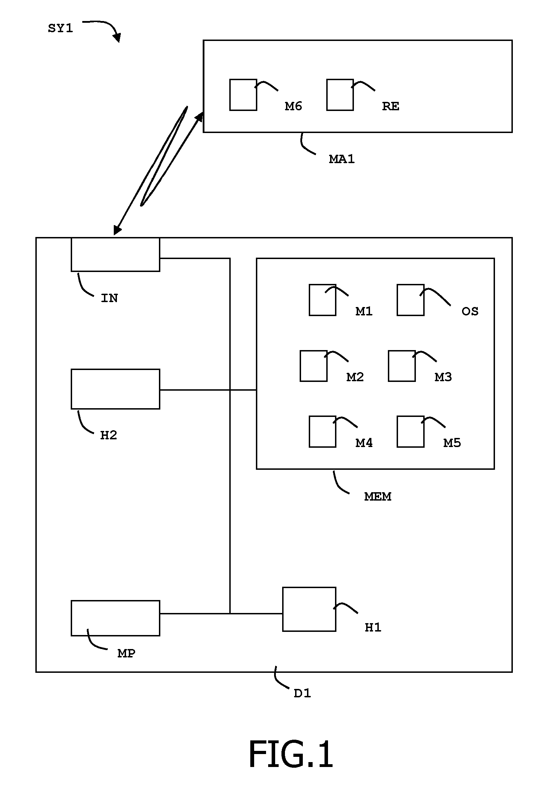

**Figure 1** shows a first system SY1 comprising an electronic device D1 connected to a machine MA1 according to a first embodiment of the invention.

According to the system SY1, an identifier UI of the device D1 is computed into the device D1 itself.

The electronic device D1 is a contactless smart card and comprises a non volatile memory MEM, a microprocessor MP, a communication interface IN and two hardware components H1 and H2. The non volatile memory MEM comprises an operating system OS which may contain a Virtual Machine.

The hardware component H1 may be an antenna allowing the device D1 to communicate through a contactless protocol. The hardware component H2 may be a working memory of RAM (Random-Access memory) type.

The device D1 is intended to exchange data with the machine MA1 through the communication interface IN.

The memory MEM may be implemented as any combinations of one, two or more memories. These memories may be any kind of non volatile memory (for example: NAND flash or EEPROM memory).

The non volatile memory MEM comprises five means M1 to M5.

The means M1 is adapted to run a first physical unclonable function (called PUF1) able to generate a response R1 which is representative of the hardware component H1. The means M2 is adapted to run a second physical unclonable function (called PUF2) able to generate a response R2 that is representative of the hardware component H2.

The means M3 (also called computing means) is adapted to compute an identifier UI of the electronic device D1 by using the responses R1 and R2.

The means M4 (also called chaining means) is adapted to generate a challenge CH from the response R1 and is adapted to provide the means M2 with the generated challenge CH.

The means M5 (also called generating means) is adapted to generate the identifier UI of the electronic device D1 from the response R2.

The machine MA1 is a personal computer having a smart card reader (not drawn). The machine MA1 comprises a reference RE and a means M6. The means M6 is adapted to compute cryptographic treatment. For example, the means M6 may be able to authenticate the device D1 by using both the generated identifier UI and the reference RE. Alternatively, the means M6 may be able to use the generated identifier UI as a key for secured treatments. For instance, the means M6 may be able to establish a secure session with the device D1 by using the reference RE while the device D1 is able to complete the secure session establishment by using the generated identifier UI.

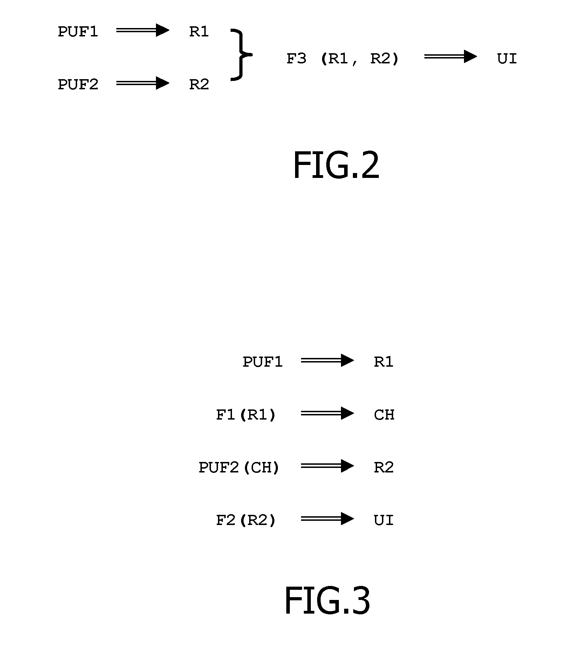

**Figure 2** shows a sequence of steps for generating an identifier UI of the device according to a first example of the invention.

At a first step, the means M1 runs the PUF1 in order to generate the response R1. An example of PUF1 is described later in this document. The means M2 runs the PUF2 in order to generate the response R2. Note that the execution of PUF1 and PUF2 may be sequentially performed. If needed, preset values may be used as challenge for PUF1 and PUF2. These preset values may be provided either by the machine MA1 or by stored into the device D1.

At a second step, the identifier UI of the device D1 is generated by a computing means M3 which run the function F3 that takes R1 and R2 as input parameters. For instance, the function F3 may concatenate R2 and R1 and compute a hash of this concatenated string. Alternatively, the function F3 may compute the encryption of R2 under R1 (e.g. R1 is used as a key) or reversely. The encryption may be run with any relevant algorithm, like DES (Data Encryption Standard) for instance.

**Figure 3** shows a sequence of steps for generating an identifier UI of the device according to a second example of the invention.

At a first step, the means M1 runs the PUF1 in order to generate the response R1.

At a second step, the chaining means M4 generates a challenge CH from the response R1. For example, the chaining means M4 may just set the value of the challenge CH with the value of the response R1. The chaining means M4 may also generate CH thanks to a function F1 which may be a hash function for example. Alternatively the function F1 may encrypt a preset pattern with the response R1 used as a key and vice versa.

At a third step, the means M2 runs the PUF2 in order to generate the response R2 by using the challenge CH as input parameter.

At a fourth step, the identifier UI of the device D1 is generated by a function F2 witch takes R2 as input parameter. For instance, the function F2 may compute a hash of the response R2. Alternatively, the function F2 may compute the encryption of R2 under a predefined pattern (which is used as a key).

Note that the functions F1 and F2 may be any suitable functions which generate a value from an input parameter in a predictable manner.

The invention is not limited to the use of two hardware components. The device identifier UI may be generated by using three or more hardware components and as many related physical unclonable functions.

For a smart card, the hardware components may be the body (which carries the chip), the resin used for coating the chip onto the body, the RAM memory, the non volatile memory or any suitable physical components. For contactless smart cards, one of the hardware components may be the antenna.

The PUF of a chip may be computed as a silicon PUF. In particular, this kind of PUF may be computed as a delay-PUF (such as an Arbiter-PUF) that exploits the variation in delay of wires and gates of a chip. For instance, a silicon PUF delay circuit may be based on several multiplexers and an arbiter where two pulses race on two delay paths. The arbiter detects the faster pulse.

The PUF of the resin may be computed as a coating PUF wherein several locations of resistive points are to be measured.

The PUF of the antenna may be computed by measuring the capacitance or inductive behavior of the antenna under certain frequency conditions. The PUF may also be computed by measuring the resonance frequency while transmitting a specific signal pattern for example.

The PUF of the body may be computed as a surface authentication, by measuring objects randomly (or not) spread out.

The PUF of a SRAM (Static Random-Access memory) body may be computed according to the default state of the memory when the SRAM component is started. Such a PUF is based on the uncertainty of the value of each bit of a SRAM memory when the SRAM component is powered. It has been shown that a number of memory points, among all the memory, have the same value for each start of a same component while being different from one component to another within the same family. Additionally, a PUF memory-based may exploit this feature within the values of some or all memory points of the SRAM component and select a set of memory points depending on a challenge.

For instance the identifier UI of a smart card device may be computed according to the following sequence. First a PUF of the chip is computed. Then the result of said first PUF is used for identifying a set of resistive points to be measured on the resin. Accordingly, the PUF of the resin is computed and generates a second result. Said second result is used for generating a signal pattern to be transmitted in contactless mode to the device D1 by the connected machine. (Assuming that the second result is previously sent to the machine by the device D1). Then the PUF of the antenna is computed and generates a third result. Said third result is used for identifying a set of surface points to be measured on the body of the card. The PUF of the body is then measures and a fourth result is generated. The identifier is then computed as the result of a hash function of said fourth result.

Thus each PUF to be run may be performed by a means located either in the device or in the connected machine, provided that the challenges or the responses are exchanged between the device and the machine when needed.

It is to be noted that depending on the order of the PUF, several identifier values may be generated for a unique device. In other words, the chaining of PUF generates different identifiers whose value depends on the order of the used PUF.

Once the identifier UI has been generated into the device D1, the identifier UI may be sent to the machine MA1 for an authentication step. Advantageously, the identifier UI may be ciphered before sending or sent through a secured channel previously established. The machine MA1 may use a reference RE in order to authenticate the device D1. For example, the means M6 may compare the values of the reference RE and the value of the received identifier UI. In case of successful comparison, the device D1 is considered as authenticated.

In another scheme, the identifier UI may be kept by the device D1 without sending to the machine MA1. In this case, the machine MA1 may try to establish a secured session with the device D1 by using the reference RE as a secret key. The device D1 is assumed to complete the establishment of the secured session by using the computed identifier UI. Alternatively, the machine MA1 may cipher data by using the reference RE as a secret key and the device D1 may decipher the received data by using the computed identifier UI as a secret key.

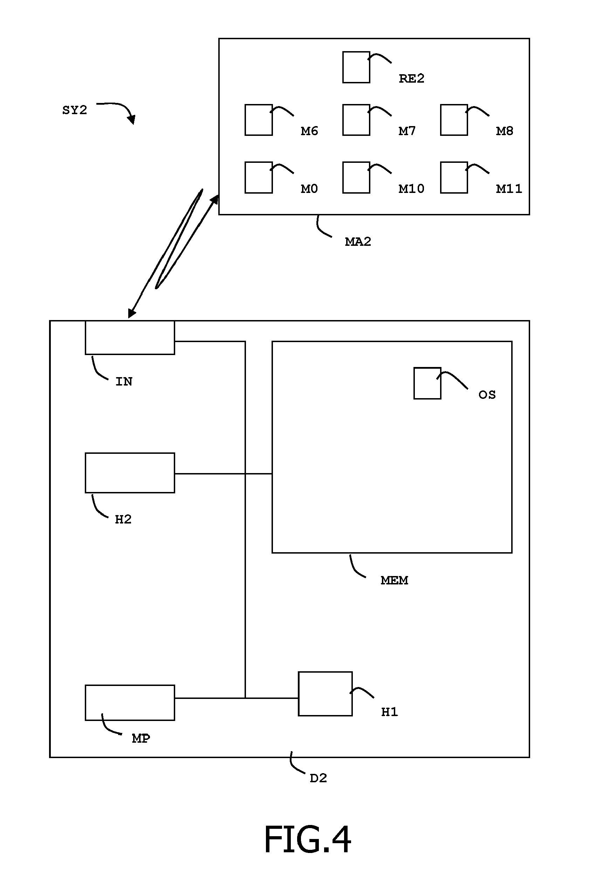

**Figure 4** shows a second system SY2 comprising an electronic device D2 connected to a machine MA2 according to a second embodiment of the invention.

According to the system SY2, the identifier of the device D2 is computed outside the device D2.

The electronic device D2 of Figure 4 is similar to the electronic device D1 of Figure 1 with the following differences: the electronic device D2 does not comprise the means M1 to M5.

The machine MA2 of Figure 4 is similar to the machine MA1 of Figure 1 with the following differences: the machine MA2 comprises the means M7 to M11 and a reference RE2 corresponding to the device D2.

The means M7 is similar to the means M1 of Figure 1. The means M7 is adapted to run PUF1 to generate a response R1 which is representative of the hardware component H1.

The means M8 is similar to the means M2 of Figure 1. The means M8 is adapted to run PUF2 to generate a response R2 that is representative of the hardware component H2.

The means M9 (also called computing means) is similar to the means M3 of Figure 1. The means M9 is adapted to compute an identifier of the electronic device D1 by using the responses R1 and R2.

The means M10 (also called chaining means) is similar to the means M4 of Figure 1. The means M10 is adapted to generate a challenge CH from the response R1 and is adapted to provide the means M8 with the generated challenge CH.

The means M11 (also called generating means) is similar to the means M5 of Figure 1. The means M11 is adapted to generate the identifier of the electronic device D1 from the response R2.

The machine MA2 also comprises a means M6 similar to the corresponding means of Figure 1. The means M6 is adapted to compute cryptographic treatment. For example, the means M6 may be able to authenticate the device D2 by using both the reference RE2 and the identifier generated for the device D2.

The invention may apply to any kinds of electronic devices made of several hardware components, like an ePassport, a USB token, a smartphone or a laptop. For example, the invention may apply to personal computer and the identifier generated according to the invention may be the combination of PUF related to the screen, the keyboard, the CPU, the RAM and the Hard Drive. According to another example, the invention may apply to tablet computer and the identifier which is generated according to the invention may be the combination of PUF related to the main processor, the graphic processor, the Wifi chip, the Wifi antenna, the Bluetooth ® chip, the keyboard, and the non volatile memory.

The invention allows authenticating the genuineness of an electronic device made of several hardware components which must be preserved in its entirety. The identifier of the device may be generated from a combination of a subset of hardware components which have an available PUF (at least two components). Advantageously, the identifier of the device may be generated from a combination of all hardware components having an available PUF.

The invention allows authenticating the genuineness of an electronic device made of hardware components and of a removable hardware component, like a smart card or a SD ® card. For instance, the invention may apply to a mobile phone and the identifier of the mobile phone may be generated as a combination of PUF related to the screen, the Telecom antenna and a plugged SIM or UICC (Universal Integrated Circuit Card).

## Claims

1. A **method** for generating an identifier (UI) of an electronic device (D1, D2), said electronic device (D1, D2) comprising first and second hardware components (H1, H2), said method comprising the following step:
- identifying a first physical unclonable function (PUF1) able to generate a first response (R1) representative of said first hardware component (H1), **characterized in that** said method comprises the further steps:
- identifying a second physical unclonable function (PUF2) able to generate a second response (R2) representative of said second hardware component (H2),
- computing the identifier (UI) by using said first and second responses (R1, R2).

2. A method according to claim 1, wherein the second physical unclonable function (PUF2) requires a challenge (CH) as input parameter and wherein the challenge (CH) is generated from said first response (R1) and wherein the identifier (UI) is generated from said second response (R2).

3. A method according to claim 1, wherein the identifier (UI) is generated by a third function (F3) which takes said first and second responses (R1, R2) as input parameters.

4. A method according to claim 3, wherein said third function (F3) is a hash of the concatenation of said first and second responses (R1, R2).

5. A method according to claim 1, wherein the method comprises the step of authenticating the electronic device (D1, D2) by using said identifier (UI).

6. A method according to claim 1, wherein the method comprises the step of using said identifier (UI) as cryptographic key.

7. A method according to claim 1, wherein the step of computing the identifier (UI) is performed into the electronic device (D1).

8. A method according to claim 1, wherein the step of computing the identifier (UI) is performed into a machine (MA2) distinct from the electronic device (D1, D2).

9. An **electronic device** (D1) comprising first and second hardware components (H1, H2), said electronic device (D1) comprising a first means (M1) adapted to run a first physical unclonable function (PUF1) able to generate a first response (R1) representative of said first hardware component (H1),
**characterized in that** said electronic device (DE) comprises a second means (M2) adapted to run a second physical unclonable function (PUF2) able to generate a second response (R2) representative of said second hardware component (H2) and **in that** said electronic device (D1) comprises a computing means (M3) adapted to compute an identifier (UI) of the electronic device (DE) by using said first and second responses (R1, R2).

10. An electronic device (D1) according to claim 9, wherein said second physical unclonable function (PUF2) requires a challenge (CH) as input parameter, wherein said electronic device (D1) comprises a chaining means (M4) able to generate the challenge (CH) from said first response (R1) and able to provide second means (M2) with said challenge (CH) and wherein the electronic device (D1) comprises a generating means (M5) adapted to generate the identifier (UI) from said second response (R2).

11. An electronic device (D1) according to claim 9, wherein the computing means (M3) is adapted to run a hash function which takes said first and second responses (R1, R2) as input parameters and generates the identifier (UI).

12. A **system** (SY1, SY2) comprising a machine (MA1, MA2) and an electronic device (D1, D2), said electronic device (D1, D2) comprising first and second hardware components (H1, H2), said system (SY) comprising a first means (M1, M7) adapted to run a first physical unclonable function (PUF1) able to generate a first response (R1) representative of said first hardware component (H1),
**characterized in that** said system (SY) comprises a second means (M2, M8) adapted to run a second physical unclonable function (PUF2) able to generate a second response (R2) representative of said second hardware component (H2) and **in that** said system (SY1, SY2) comprises a computing means (M3, M9) adapted to compute an identifier (UI) of the electronic device (D1, D2) by using said first and second responses (R1, R2).
